# EUROPÄISCHE PATENTANMELDUNG

(11) **EP 4 818 832 A1**
(43) Veröffentlichungstag der Anmeldung: **07.10.2026**
(21) Anmeldenummer: 25167460.2
(22) Anmeldetag: 31.03.2025
(51) Int. Cl.: G05B 19/418, G06V 10/70, G06V 10/77, G06V 10/774, G06V 10/82

(54) **VERFAHREN ZUR BEREITSTELLUNG EINES DATENSATZES AUS MASCHINENDATEN FÜR EIN AUF REINFORCEMENT LEARNING BASIERENDES KÜNSTLICHES NEURONALES NETZ, VERFAHREN ZUM TRAINING EINES AUF REINFORCEMENT LEARNING BASIERENDEN KÜNSTLICHEN NEURONALEN NETZES, VORRICHTUNG UND COMPUTERPROGRAMMPRODUKT**

(71) Anmelder: Siemens Aktiengesellschaft, 80333 München (DE)
(72) Erfinder: Körwer, Niklas, 51065 Köln (DE); Bischoff, Martin, 85653 Aying, Großhelfendorf (DE); Kronester, Felix, 91058 Erlangen (DE)
(74) Vertreter: Siemens Patent Attorneys

(57) **Zusammenfassung**

Verfahren zur Bereitstellung eines Datensatzes aus Maschinendaten für ein auf Reinforcement Learning basierendes künstliches neuronales Netz, Verfahren zum Training eines auf Reinforcement Learning basierenden künstlichen neuronalen Netzes, Vorrichtung und Computerprogrammprodukt

Es wird ein Verfahren zur Bereitstellung eines Datensatzes (1) aus Maschinendaten für ein auf Reinforcement Learning basierendes künstliches neuronales Netz vorgeschlagen, umfassend die Schritte:
- Bereitstellen der Maschinendaten (2), insbesondere Maschinenzustände;
- Bereitstellen wenigstens eines ersten Abbilds (3), wobei die Maschinendaten als Elemente (16) und/oder Vektoren (16), insbesondere Pixel (16), des ersten Abbilds bereitgestellt werden und jeweils das einzelne Element (16) und/oder eine Gruppe von Elementen und/oder eine Gruppe benachbarter Elemente wenigstens einem Datenpunkt aus den Maschinendaten zugeordnet wird und;
- Bereitstellen des Datensatzes (1) als eine Mehrzahl von ersten Abbildern und/oder für eine Parametrierung einer Reinforcement Learning Trainingsumgebung.

Weiterhin betrifft die Erfindung ein Verfahren zum Training eines auf Reinforcement Learning basierenden künstlichen neuronalen Netzes, eine Vorrichtung und ein Computerprogrammprodukt.

## Beschreibung

Für Maschinen und ganze Produktionssysteme sind insbesondere Förderbänder für den effizienten Transport von Paketen und Produkten unerlässlich. Diese Fördersysteme sind oft in verschiedenen Layouts konfiguriert, um unterschiedlichen betrieblichen Anforderungen gerecht zu werden. Eine erhebliche Herausforderung ergibt sich insbesondere aus einer schwankenden Rate der zu transportierenden Produkte, wobei die Rate eine Anzahl von Produkten, die pro Zeiteinheit verarbeitet werden, beschreiben kann. Diese Variabilität erfordert eine Lösung, die sich insbesondere an Förderbandgeschwindigkeiten anpassen kann, um eine optimale Leistung und Effizienz in allen Konfigurationen sicherzustellen.

Um diese Herausforderungen zu bewältigen, kann Reinforcement Learning angewendet werden, um ein künstliches neuronales Netzwerk zu trainieren, das Sollwerte für die Förderbänder bereitstellt. Viele neuronale Netzwerkarchitekturen haben jedoch Schwierigkeiten mit einer räumlichen Wahrnehmung, wobei die räumliche Wahrnehmung eine Verarbeitung von Daten mit räumlichen Bezügen und/oder Abhängigkeiten umfassen kann. Exemplarisch für diese Schwierigkeit ist eine Schaffung eines klaren Verständnisses der räumlichen Position von Förderbändern, Sensoren und Produkten auf den Förderbändern, welches entscheidend für die Steuerung der Bandgeschwindigkeiten ist. Hierdurch können insbesondere Kollisionen zwischen Produkten und/oder Kollisionen zwischen Produkten und der Umwelt vermieden.

Die Probleme können durch den Einsatz fortschrittlicherer Architekturen wie Long Short-Term Memory (LSTM), Gated Recurrent Unit (GRU) oder sogar Transformer-Modelle gelöst werden. Diese Modelle sind in der Lage, räumliche Abhängigkeiten bis zu einem gewissen Grad zu erfassen, jedoch zum Preis einer erhöhten Trainingszeit, da diese Abhängigkeiten keine intrinsische Eigenschaft der jeweiligen Architektur sind, sondern dediziert trainiert werden müssen. Andererseits sind diese Modelle sehr schwierig zu trainieren und erfordern leistungsfähige Hardware, um ausgeführt zu werden.

Eine weitere Option ist es, eine Merkmalsvorverarbeitung der Daten vorzunehmen, die von der Anwendung bereitgestellt wird, um den Reinforcement-Learning-Prozess zu erleichtern und dem künstlichen neuronalen Netz mehr Informationen zur Verfügung zu stellen. Die Eingaben werden hier jedoch in ein einfaches Multi-Layer-Perzeptron (MLP) eingespeist, das mit dem räumlichen Umfang der Merkmale und insbesondere mit deren Beziehung zu anderen Merkmalen schnell an Grenzen stößt. Auch für große Merkmalsvektoren werden MLP schwierig zu trainieren und langsam in der Ausführung, ähnlich wie die fortschrittlicheren Architekturen für künstliche neuronale Netze.

Der vorliegenden Erfindung liegt die Aufgabe zugrunde, eine effizientere dynamische Steuerung für Automatisierungsaufgaben und/oder deren effizientere Entwicklung bereitzustellen.

Die Aufgabe wird durch ein Verfahren mit den Merkmalen des unabhängigen Patentanspruches 1, durch ein Verfahren mit den Merkmalen des unabhängigen Patentanspruchs 8 sowie durch eine Vorrichtung mit den Merkmalen des unabhängigen Patentanspruches 10 und durch ein Computerprogrammprodukt mit den Merkmalen des unabhängigen Patentanspruches 13 gelöst. In den abhängigen Patentansprüchen sind vorteilhafte Ausgestaltungen und Weiterbildungen der Erfindung angegeben.

Das erfindungsgemäße Verfahren zur Bereitstellung eines Datensatzes aus Maschinendaten für ein auf Reinforcement Learning basierendes künstliches neuronales Netz, umfasst die Schritte:
- Bereitstellen der Maschinendaten, insbesondere Maschinenzustände;
- Bereitstellen wenigstens eines ersten Abbilds, wobei die Maschinendaten als Elemente und/oder Vektoren, insbesondere Pixel, des ersten Abbilds bereitgestellt werden und jeweils das einzelne Element und/oder eine Gruppe von Elementen und/oder eine Gruppe benachbarter Elemente wenigstens einem Datenpunkt aus den Maschinendaten zugeordnet wird und;
- Bereitstellen des Datensatzes als eine Mehrzahl von ersten Abbildern und/oder für eine Parametrierung einer Reinforcement Learning Trainingsumgebung.

Maschinendaten können jede Art von sensorisch erfassten und/oder aus einer Maschinenkonfiguration ausgelesenen Daten sein. Maschinendaten können auch Produktdaten der jeweiligen Maschine und/oder Maschinenzustandswerte sein.

Maschinenzustände können unmittelbar als Information bereitgestellt werden und/oder sie können aus Maschinendaten abgeleitet und anschließend bereitgestellt werden.

Der Datensatzkann Maschinendaten umfassen, die als eine Mehrzahl aus ersten Abbildern bereitgestellt werden. Der Datensatzkann hierbei als eine Datenbank, insbesondere auf einem Server und/oder als eine Datei, insbesondere in einem Dateisystem bereitgestellt werden.

Die Trainingsumgebung kann eine Simulation umfassen, wobei die Simulation ein physikalisches Modell und/oder ein Umgebungsmodell und/oder ein Modell einer Maschine, insbesondere eines Förderbands umfassen kann.

Die Bereitstellung des Datensatz kann insbesondere dadurch erfolgen, dass das Bereitstellen des ersten Abbilds wiederholt mit unterschiedlichen Maschinendaten erfolgt.

Das erste Abbild kann als eine Datenstruktur, insbesondere als ein Array und/oder Tabelle bereitgestellt werden. Das erste Abbild kann auch als ein Schwarzweiß-Bild, in Graustufen und/oder in Farbe bereitgestellt werden.

Die Elemente und/oder Vektoren des ersten Abbilds können Pixel sein, wobei eine Kombination aus Anordnung der Pixel im Abbild und die farbliche Ausbildung der Pixel eine Kodierung von Maschinendaten im Abbild ermöglicht.

Die Gruppe von Elementen kann eine Gruppe von Pixel sein, wobei die Gruppe eine inhaltlich zusammenhängende Region des Abbilds sein kann.

Durch die vorliegende Erfindung wird ein Verfahren zur vorteilhaften Bereitstellung des Datensatzes aus Maschinendaten für das auf Reinforcement Learning basierende künstliche neuronale Netz bereitgestellt. Das ist deshalb der Fall, weil der Datensatz den Trainingsaufwand, auf Grund einer beim Training resultierenden einfacheren Netzarchitektur, verringern kann. Diese Verringerung des Trainingsaufwands kann sich mittels einer geringeren Trainingsdauer und/oder einem geringeren Energieaufwand ausbilden. Darüber hinaus, ermöglicht die einfachere Netzarchitektur eine vorteilhafte schnellere Inferenz durch das künstliche neuronale Netz.

Das erfindungsgemäße Verfahren zum Training eines künstlichen neuronalen Netzes, ist dadurch gekennzeichnet, dass das künstliche neuronale Netz mit dem Datensatz gemäß einem der vorhergehenden Ansprüche trainiert wird.

Das künstliche neuronale Netz kann ein Convolutional Neural Network sein (CNN). Das neuronale Netz kann zusätzlich zur Verarbeitung von Abbildern, auch eine Fähigkeit zu einer

Multimodalität aufweisen, wobei insbesondere als Eingangswerte und/oder Ausgangswerte Daten aus einem Beschleunigungssensor und/oder einem Feuchtigkeitssensor und/oder einem Vibroakustiksensor, insbesondere Frequenzanteile eines Schalls, mit den Abbildern gemeinsam verarbeitet werden.

Die für das Training verwendbare Simulation kann Maschinendaten, insbesondere einen Maschinenzustand als Eingangswert für das Training des künstlichen neuronalen Netzes bereitstellen. Zu Beginn des Trainings kann dieser Eingangswert bereitgestellt werden, das neuronale Netz führt dann die Inferenz durch und kann als Ausgangswerte Sollgrößen für die simulierte Maschine bereitstellen. Die Sollgrößen können zur Steuerung der simulierten Maschine auf diese angewendet werden. Die Simulation und/oder eine weitere Komponente der Trainingsumgebung kann abhängig von der vorgenommenen Steuerung der simulierten Maschine den resultierenden Maschinenzustand erfassen und mittels einer Belohnungsfunktion berechnen, wie gut die Steuerungsaufgabe gelöst wurde. In einem weiteren Schritt stellt die Trainingsumgebung den aktuellen Maschinenzustand und das Ergebnis der Belohnungsfunktion dem neuronalen Netz bereit. Das neuronale Netz wird abhängig diesen beiden Eingangswerte wiederholt trainiert, wobei das Trainingsziel in einer Verbesserung des Ergebnisses der Belohnungsfunktion bestehen kann.

Dadurch ist es vorteilhafterweise möglich, eine Komplexität des Trainings zu verringern. Das ist deshalb der Fall, weil die Maschinendaten in einer gewissen Einheitlichkeit als Elemente bzw. Vektoren in das erste Abbild kodiert wurden. Ein Training mit unterschiedlichen Arten von Daten, insbesondere eine Kombination aus Zahlen, Text und Bildern kann vorteilhafterweise entfallen. Die vorteilhafte Verringerung der Komplexität des Trainings kann sich in einer kürzeren Trainingsdauer und/oder einem geringeren Aufwand an Energie und/oder Rechenleistung widerspiegeln, wobei diese Eigenschaften vorteilhafterweise zu einer effizienteren Entwicklung Lösungen für Automatisierungsaufgaben beitragen können.

Die erfindungsgemäße Vorrichtung umfasst eine Recheneinheit, ein künstliches neuronales Netz, und ein Produktionssystem,
wobei das künstliche neuronale Netz für eine Inferenz mittels Maschinendaten des Produktionssystems ausgebildet ist
und die Recheneinheit dazu ausgebildet ist, die Maschinendaten mittels eines zweiten Abbilds dem künstlichen neuronalen Netz als ein Eingangswert bereitzustellt,
wobei die Maschinendaten Elemente und/oder Vektoren, insbesondere Pixel, des zweiten Abbilds sind
und jeweils das einzelne Element und/oder eine Gruppe von Elementen und/oder eine Gruppe benachbarter Elemente wenigstens einem Datenpunkt aus den Maschinendaten zuordenbar ist, wobei die Recheneinheit für eine Steuerung des Produktionssystems in einer Abhängigkeit zu dem zweiten Abbild als Eingangswert für das künstliche neuronale Netz und/oder einem Ausgangswert des künstlichen neuronalen Netzes ausgebildet ist.

Die Recheneinheit kann am Produktionssystem angeordnet sein. Die Recheneinheit kann außerdem als eine virtuelle Recheneinheit in einer Cloud ausgebildet sein. Dadurch ist vorteilhafterweise keine lokale Recheneinheit mehr erforderlich, sofern es eine geforderte Latenz zwischen dem Produktionssystem und der virtuellen Recheneinheit erlaubt.

Das Produktionssystem kann eine Abfüllanlage und/oder eine Fördertechnik, insbesondere zur Produktvereinzelung und/oder zur Vereinigung von Materialflüssen, und/oder eine Spritzgussmaschine und/oder eine Drehmaschine und/oder Presse und/oder ein Ofen und/oder eine Kombination aus mehreren Maschinen und/oder Anlagen sein.

Das zweite Abbild kann alle Eigenschaften des ersten Abbilds umfassen.

Dadurch kann vorteilhafterweise als Architektur für das neuronale Netz das CNN genutzt werden, da CNN besonders leistungsfähig in der Bildverarbeitung sind. Das ist deshalb der Fall, weil das durch die Recheneinheit bereitgestellte zweite Abbild die Maschinendaten umfasst.

Zusätzlich zu der vorteilhaften Verarbeitung durch das CNN, ermöglicht die Steuerung des Produktionssystems mittels der Recheneinheit eine vorteilhafte Automatisierungslösung. Das ist deshalb der Fall, weil abhängig vom Ausgangswert des neuronalen Netzes eine Steuerung des Produktionssystems bereitgestellt wird und diese Art der Steuerung effizienter auf Veränderungen der Maschinendaten reagieren kann.

Das erfindungsgemäße Computerprogrammprodukt, umfasst Befehle, die bei der Ausführung des Programms durch eine Recheneinheit, insbesondere einen Computer, diesen veranlassen, das erfindungsgemäße Verfahren zur Bereitstellung eines Datensatz für ein künstliches neuronales Netz und/oder das erfindungsgemäße Verfahren zum Training eines künstlichen neuronalen Netzes und/oder Schritte der beiden Verfahren auszuführen.

Es ergeben sich zum erfindungsgemäßen Verfahren zur Erzeugung von Trainingsdaten gleichartige, gleichwertige und gleichwirkende Vorteile.

Gemäß einer vorteilhaften Ausgestaltung der Erfindung können den Elementen des ersten Abbilds Motordrehzahlwerte und/oder Temperaturwerte und/oder Öldruckwerte und/oder Stromstärkewerte wenigstens eines Motors und/oder eine Position eines Förderguts entlang einer Fördertechnikanlage, zugeordnet werden.

Öldruckwerte können sich auf einen Druck in einem hydraulischen System beziehen. Druckwerte aus pneumatischen Systemen können hierbei ebenfalls umfasst sein, da sich lediglich das druckausübende Medium unterscheidet. Mit anderen Worten können Elemente des ersten Abbilds Druckwerte aus pneumatischen und hydraulischen Systemen umfassen.

Dadurch ist es vorteilhafterweise möglich die Vorrichtung spezifisch für einen Einsatz in Verbindung mit der Fördertechnikanlage zu betreiben.

In einer vorteilhaften Weiterbildung der Erfindung wird mittels des ersten Abbilds wenigstens eine Klasse von Maschinendaten jeweils den Elementen einer Zeile und/oder einer Spalte des ersten Abbilds zugeordnet.

Eine Klasse von Maschinendaten kann eine Klassifizierung nach Temperaturdaten, Geschwindigkeitsdaten, Gewichtsdaten, Positionsdaten und/oder weiteren Klassen umfassen. Mit anderen Worten können, insbesondere als Positionsdaten klassifizierte Daten auf einer gemeinsamen Zeile und/oder Spalte im Abbild angeordnet sein. Die Anordnung auf der jeweiligen Zeile und/oder Spalte des Abbilds kann abhängig von einer Richtung und/oder Leserichtung sein.

Dadurch kann vorteilhafterweise eine zeilenweise und/oder spaltenweise Auswertung der im Abbild gespeicherten Klassen von Maschinendaten erfolgen. Dies ist besonders vorteilhaft, da sich auf diese Weise Maschinendaten mit einem geringen Daten-Overhead in Beziehung setzen lassen.

Gemäß einer vorteilhaften Ausgestaltung der Erfindung werden die mit den Maschinendaten verknüpften Elemente der jeweiligen Zeile oder Spalte des ersten Abbilds abhängig von einer räumlichen Lage einer Maschine angeordnet.

Dadurch ist es vorteilhafterweise möglich Maschinendaten noch effizientere bereitzustellen. Das ist deshalb der Fall, weil ein Kontextwissen um die räumliche Lage der Maschine durch

Anordnung von Daten auf dem Abbild kodiert wird. Mit dieser Art der Konvention lassen sich vorteilhafterweise Informationen kodieren, die in herkömmlichen Input-Daten-Darstellungen typischerweise fehlen und/oder den neuronalen Netzen aufwändig antrainiert werden müssen. Dafür sind wiederum größere Netze (Layer und Knoten) nötig, wodurch auch der Auswertungs/Inferenz-Aufwand steigt.

In einer vorteilhaften Weiterbildung der Erfindung wird die Maschine als eine Fördertechnik und/oder Förderband betrieben und die jeweilige Zeile und/oder Spalte des ersten Abbilds als eine virtuelle Strecke entlang dem Förderband verarbeitet, wobei entlang dieser virtuellen Strecke die mit Maschinendaten verknüpften Elementen angeordnet werden.

Die virtuelle Strecke kann als ein Konzept verstanden werden, bei dem eine Höhe und/oder Breite des Abbilds mit räumlichen Dimensionen der Vorrichtung assoziiert werden. Mit anderen Worten kann am Beispiel des Förderbands, die Breite des Abbilds mit der Länge des Förderbands assoziiert sein. Die Angaben zur Breite des Abbilds können hierbei maßstäblich zur Länge des Förderbands sein. Darüber hinaus sind Länge und Breite oder mit anderen Worten die einzelnen Seiten des Abbilds abhängig von der Assoziation mit den räumlichen Dimensionen der Vorrichtung austauschbar.

Dadurch können vorteilhafterweise Maschinendaten noch effizienter bereitgestellt werden. Das ist deshalb der Fall, weil ein Kontextwissen um die räumliche Lage entlang des Förderbands implizit durch Anordnung von Daten auf dem Abbild kodiert wird. Mit dieser Art der Konvention lassen sich vorteilhafterweise zusätzliche Informationen, insbesondere zu einem Fördergut, kodieren, ohne das zusätzliche Elemente und/oder Vektoren benötigt werden oder nur eine geringere Menge zusätzlicher Elemente und/oder Vektoren.

Gemäß einer vorteilhaften Ausgestaltung können Maschinendaten, die über eine räumliche Lage oder darüber hinaus in Abhängigkeit zueinander stehen in benachbarten Zeilen und/oder Spalten des Abbilds angeordnet werden.

Dadurch ist es vorteilhafterweise möglich eine effizientere Inferenz mittels des künstlichen neuronalen Netzens bereitzustellen. Das ist deshalb der Fall, weil das künstliche neuronale Netz eine Korrelation zwischen verschiedenen Maschinendaten durch die benachbarte Anordnung noch besser identifizieren kann.

Gemäß einer vorteilhaften Ausgestaltung der Erfindung werden die ersten Abbilder als einzelne Schichten eines Stapels aus Abbildern bereitgestellt, sodass eine schichtweise mehrdimensionale, insbesondere räumliche, Darstellung von Maschinendaten bereitgestellt wird, wobei die ersten Abbilder, insbesondere durch einen Indexwert, abhängig von einer räumlichen Zuordnung der Maschinendaten im Stapel sortiert werden.

Dadurch ist es vorteilhafterweise möglich Maschinendaten, insbesondere räumlich anzuordnen. Das ist insbesondere vorteilhaft bei Maschinen wie Förderbändern, wobei die räumliche Tiefe die Möglichkeit bietet das Förderband in seiner Breite datentechnisch abzubilden. Ein weiteres Beispiel wären 3D-Drucker, wobei insbesondere ein Fertigungsraum hiermit datentechnisch abgebildet werden kann. Diese Möglichkeit geht vorteilhafterweise mit einem effizienteren Betrieb der Maschine einher.

In einer vorteilhaften Weiterbildung der Erfindung werden dem Indexwert ein parametrierbarer Wert, insbesondere eine Längeneinheit, zugewiesen.

Dadurch kann vorteilhafterweise eine einfachere Zuordnung der schichtweisen Daten erfolgen, welche außerdem einfacherer für den Menschen lesbar ist.

Gemäß einer vorteilhaften Ausgestaltung der Erfindung wird das trainierte künstliche neuronale Netz für eine Inferenz mittels Maschinendaten, insbesondere eines Produktionssystems und/oder einer Fördertechnikanlage verwendet.

Dadurch ist es vorteilhafterweise möglich das künstliche neuronale Netz für den hochspezialisierten Einsatz im Produktionssystem und/oder der Fördertechnikanlage zu verwenden.

Gemäß einer vorteilhaften Ausgestaltung der Erfindung wird das künstliche neuronale Netz mittels einer Trainingsumgebung trainiert, wobei die Trainingsumgebung eine Simulation umfasst, wobei die Simulation ein physikalisches Modell und/oder ein Umgebungsmodell und/oder ein Modell einer Maschine, insbesondere eines Förderbands umfasst und die Simulation mittels des Datensatzes parametriert und/oder mittels des Datensatzes Daten für eine epochenweises Training in der Simulation bereitgestellt werden.

Dadurch ist es vorteilhafterweise möglich, eine integrierte Trainingsumgebung für das Training des künstlichen neuronalen Netzes mittels Reinforcement Learning bereitzustellen. Das ist deshalb der Fall, weil die Simulation in einer automatisierten Weise immer wieder eine neue Trainingsepoche durchlaufen kann, wobei die Simulationsparameter in jeder Epoche variieren können, sodass das neuronale Netz abhängig von einer gewünschten Aufgabe trainiert werden kann.

Gemäß einer vorteilhaften Ausgestaltung der Erfindung umfasst das zweite Abbild Datenpunkte von Maschinendaten aus mehreren Fördertechnikabschnitten des Produktionssystems, insbesondere Bandabschnitten.

Produktionssysteme können mit einer steigenden Größe und/oder Komplexität in Abschnitte eingeteilt werden. Am Beispiel von Fördertechnik, insbesondere mit Förderbändern, können diese in mehrere einzelnen Förderbänder, auch Bandabschnitte aufgeteilt werden.

Dadurch ist es vorteilhafterweise möglich, eine effizientere Steuerung der Fördertechnikanlage bereitzustellen. Das ist deshalb der Fall, weil durch die Verwendung der zweiten Abbilder mit Maschinendaten aus verschiedenen Bandabschnitten, vorteilhafterweise auf eben diese individuellen Steuerungsanforderungen der unterschiedlichen Bandabschnitte eingegangen wird.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: eine Darstellung eines ersten und/oder zweiten Abbilds in einer schematischen Gegenüberstellung mit einem Förderband; und
- Figur 2: zeigt eine Datenpipeline als ein Blockdiagramm.

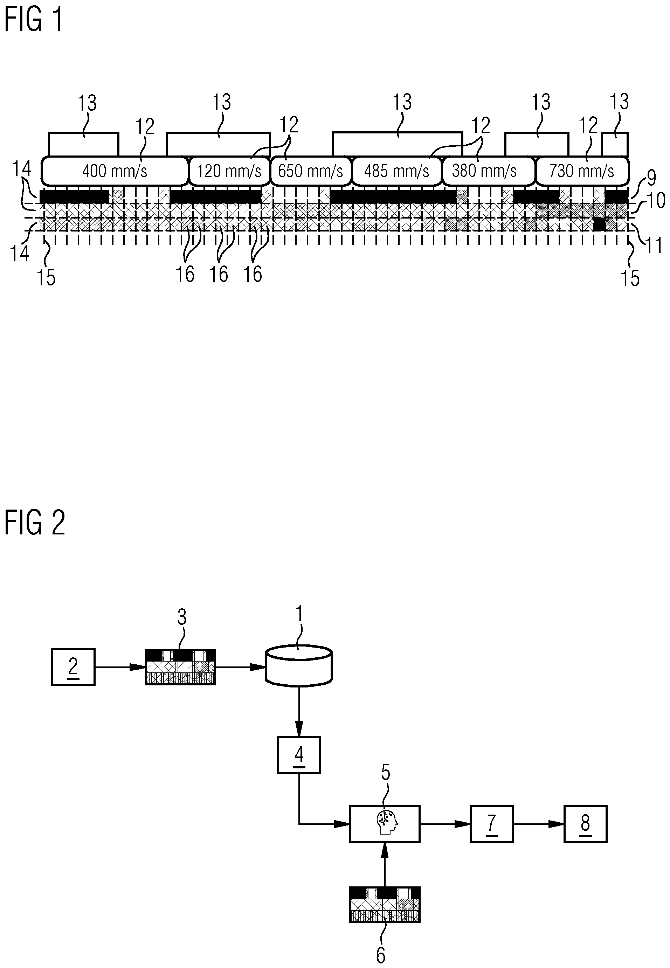

Figur 1 zeigt eine Darstellung eines ersten und/oder zweiten Abbilds in einer schematischen Gegenüberstellung mit Förderbandabschnitten 12, welche Produkte 13 fördern. Das Schema weist für die einzelnen Bandabschnitte 12 exemplarisch Geschwindigkeiten in mm/s aus.

Das Ausführungsbeispiel des Abbilds in Figur 1 setzt sich aus Pixel 16 zusammen, welche in Zeilen 14 und Spalten 15 angeordnet sind. Das Ausführungsbeispiel sieht vor, dass als Metriken eine Produktposition 9, die Bandgeschwindigkeit 10 und ein Prozessparameter 11, insbesondere ein Produkttyp den einzelnen Zeilen jeweils zugeordnet wird. Die Werte der Metriken 9,10,11 werden insbesondere als Farbwerte oder Graustufenwerte für die einzelnen Pixel des Abbilds kodiert.

Die Gegenüberstellung der schematischen Bandabschnitte 12 und des Abbilds zielt auf die Verdeutlichung der räumlichen Abhängigkeit ab. Die räumliche Abhängigkeit wird hergestellt, indem die Strecke entlang der Bandabschnitte 12 mit einer Längsseite des Abbilds in Beziehung gesetzt wird, wobei die Länge der Längsseite und die Gesamtlänge der Bandabschnitte 12 in Figur 1 ähnlich sind.

Durch das Kodieren der einzelnen Pixel 16 abhängig von den Metriken 9,10,11 und der räumlichen Lage von Produkten 13 und Bandabschnitten 12 entsteht das in Figur 1 gezeigte Abbild, welches in Verbindung mit weiteren ähnlichen Abbildern den Datensatz für das Training des künstlichen neuronalen Netzes bilden können. Darüber hinaus kann ein ähnliches Abbild als ein Eingangswert für das schließlich trainierte künstliche neuronale Netz dienen, um einen gewünschten Ausgabewert durch Inferenz bereitzustellen.

Figur 2 zeigt eine Datenpipeline als ein Blockdiagramm. Die Datenpipeline startet mit dem Schritt des Bereitstellens der Maschinendaten 2 und aus den Maschinendaten werden erste Abbilder bereitgestellt 3. Bereitgestellte erste Abbilder können gesammelt und als ein Datensatz bereitgestellt werden 1.

In einem weiteren Schritt in der Datenpipeline kann das Training des künstlichen neuronalen Netzes 4 mittels des Datensatzes erfolgen. Das hierbei trainierte künstliche neuronale Netz kann für eine Inferenz 5 genutzt werden, hierbei werden dem künstlichen neuronalen Netz wenigstens ein zweites Abbild als Eingangswert bereitgestellt 6. Als ein Ergebnis der Inferenz stellt das künstliche neuronale Netz einen Ausgangswert bereit 7 und der hierbei bereitgestellte Ausgangswert 7 kann für eine Steuerung eines Produktionssystems 8 verwendet werden.

Gleichartige, gleichwertige oder gleichwirkende Elemente können in einer der Figuren oder in den Figuren mit denselben Bezugszeichen versehen sein.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Bereitstellen des Datensatzes
- 2: Bereitstellen der Maschinendaten
- 3: Bereitstellen des ersten Abbilds
- 4: Training des künstlichen neuronalen Netzes
- 5: Inferenz des künstlichen neuronalen Netzes
- 6: Bereitstellen des zweiten Abbilds als Eingangswert
- 7: Bereitstellen des Ausgangswerts
- 8: Steuern des Produktionssystems
- 9: Produktposition
- 10: Bandgeschwindigkeit
- 11: Prozessparameter
- 12: Bandabschnitt
- 13: Produkt
- 14: Zeilen
- 15: Spalten
- 16: Element und/oder Vektor und/oder Pixel

## Patentansprüche

1. Verfahren zur Bereitstellung eines Datensatzes (1) aus Maschinendaten für ein auf Reinforcement Learning basierendes künstliches neuronales Netz, umfassend die Schritte:
- Bereitstellen der Maschinendaten (2), insbesondere Maschinenzustände;
- Bereitstellen wenigstens eines ersten Abbilds (3), wobei die Maschinendaten als Elemente (16) und/oder Vektoren (16), insbesondere Pixel (16), des ersten Abbilds bereitgestellt werden und jeweils das einzelne Element (16) und/oder eine Gruppe von Elementen und/oder eine Gruppe benachbarter Elemente wenigstens einem Datenpunkt aus den Maschinendaten zugeordnet wird und;
- Bereitstellen des Datensatzes (1) als eine Mehrzahl von ersten Abbildern und/oder für eine Parametrierung einer Reinforcement Learning Trainingsumgebung.

2. Verfahren gemäß Anspruch 1, **dadurch gekennzeichnet, dass** den Elementen des ersten Abbilds Motordrehzahlwerte (11) und/oder Temperaturwerte (11) und/oder Öldruckwerte (11) und/oder Stromstärkewerte (11) wenigstens eines Motors und/oder eine Position eines Förderguts (13) entlang einer Fördertechnikanlage (12), insbesondere eines Förderbandes (12), zugeordnet werden.

3. Verfahren gemäß einem der vorhergehenden Ansprüche, **dadurch gekennzeichnet, dass** mittels des ersten Abbilds wenigstens eine Klasse von Maschinendaten jeweils den Elementen (16) einer Zeile (14) und/oder einer Spalte (15) des ersten Abbilds zugeordnet wird.

4. Verfahren gemäß einem der vorhergehenden Ansprüche, **dadurch gekennzeichnet, dass** die mit den Maschinendaten verknüpften Elemente (16) der jeweiligen Zeile (14) oder Spalte (15) des ersten Abbilds abhängig von einer räumlichen Lage einer Maschine angeordnet werden.

5. Verfahren gemäß Anspruch 4, **dadurch gekennzeichnet, dass** die Maschine als eine Fördertechnik und/oder Förderband (12) betrieben wird und die jeweilige Zeile (14) und/oder Spalte (15) des ersten Abbilds als eine virtuelle Strecke entlang dem Förderband (12) verarbeitet wird, wobei entlang dieser virtuellen Strecke die mit Maschinendaten verknüpften Elementen (16) angeordnet werden.

6. Verfahren gemäß einem der vorhergehenden Ansprüche, **dadurch gekennzeichnet, dass** Maschinendaten, die über eine räumliche Lage oder darüber hinaus in Abhängigkeit zueinander stehen in benachbarten Zeilen und/oder Spalten des Abbilds angeordnet werden.

7. Verfahren gemäß einem der vorhergehenden Ansprüche, **dadurch gekennzeichnet, dass** die ersten Abbilder als einzelne Schichten eines Stapels aus Abbildern bereitgestellt werden, sodass eine schichtweise mehrdimensionale, insbesondere räumliche, Darstellung von Maschinendaten bereitgestellt wird, wobei die ersten Abbilder, insbesondere durch einen Indexwert, abhängig von einer räumlichen Zuordnung der Maschinendaten im Stapel sortiert werden.

8. Verfahren gemäß Anspruch 7, **dadurch gekennzeichnet, dass** dem Indexwert ein parametrierbarer Wert, insbesondere eine Längeneinheit, zugewiesen wird.

9. Verfahren zum Training eines auf Reinforcement Learning basierenden künstlichen neuronalen Netzes (4), **dadurch gekennzeichnet, dass** das künstliche neuronale Netz mit dem Datensatz gemäß einem der vorhergehenden Ansprüche trainiert wird.

10. Verfahren gemäß Anspruch 9, **dadurch gekennzeichnet, dass** das trainierte künstliche neuronale Netz für eine Inferenz (5) mittels Maschinendaten, insbesondere eines Produktionssystems und/oder einer Fördertechnikanlage verwendet wird.

11. Verfahren gemäß Anspruch 9 oder 10, **dadurch gekennzeichnet, dass** das künstliche neuronale Netz mittels einer Trainingsumgebung trainiert wird, wobei die Trainingsumgebung eine Simulation umfasst, wobei die Simulation ein physikalisches Modell und/oder ein Umgebungsmodell und/oder ein Modell einer Maschine, insbesondere eines Förderbands umfasst und die Simulation mittels des Datensatzes parametriert und/oder mittels des Datensatzes Daten für eine epochenweises Training in der Simulation bereitgestellt werden.

12. Vorrichtung, umfassend eine Recheneinheit, ein künstliches neuronales Netz, und ein Produktionssystem,
wobei das künstliche neuronale Netz für eine Inferenz (5) mittels Maschinendaten des Produktionssystems ausgebildet ist
und die Recheneinheit dazu ausgebildet ist, die Maschinendaten mittels eines zweiten Abbilds dem künstlichen neuronalen Netz als ein Eingangswert bereitzustellt (6),
wobei die Maschinendaten Elemente (16) und/oder Vektoren (16), insbesondere Pixel (16), des zweiten Abbilds sind
und jeweils das einzelne Element (16) und/oder eine Gruppe von Elementen und/oder eine Gruppe benachbarter Elemente wenigstens einem Datenpunkt aus den Maschinendaten zuordenbar ist, wobei die Recheneinheit für eine Steuerung des Produktionssystems (8) in einer Abhängigkeit zu dem zweiten Abbild als Eingangswert für das künstliche neuronale Netz und/oder einem Ausgangswert des künstlichen neuronalen Netzes ausgebildet ist.

13. Vorrichtung gemäß Anspruch 12, **dadurch gekennzeichnet, dass** die Vorrichtung ein Produktionsleitsystem umfasst und das Produktionsleitsystem und/oder die Recheneinheit für die Bereitstellung des zweiten Abbilds (6) ausgebildet ist.

14. Vorrichtung gemäß einem der Ansprüche 12 oder 13, **dadurch gekennzeichnet, dass** das zweite Abbild Datenpunkte von Maschinendaten aus mehreren Fördertechnikabschnitten des Produktionssystems, insbesondere Bandabschnitten (12) umfasst.

15. Computerprogrammprodukt, umfassend Befehle, die bei der Ausführung des Programms durch eine Recheneinheit, insbesondere einen Computer, diesen veranlassen, eines der Verfahren und/oder Schritte der Verfahren gemäß einem der Ansprüche 1 bis 9 auszuführen.
